# EUROPEAN PATENT SPECIFICATION

(11) **EP 4 180 616 B1**
(45) Date of publication and mention of the grant of the patent: **13.05.2026**
(21) Application number: 21901947.8
(22) Date of filing: 13.05.2021
(51) Int. Cl.: B60R 3/00, E06C 1/18

(54) **MULTIFUNCTIONAL LADDER FRAME STRUCTURE**
MULTIFUNKTIONSLEITERRAHMENSTRUKTUR
CADRE À STRUCTURE EN ÉCHELLE MULTIFONCTIONNEL

(30) Priority: 11.12.2020 CN 202011461139
(43) Date of publication of application: 17.05.2023
(73) Proprietor: Formosa Saint Jose Corp., Taipei, Taiwan 106 (CN)
(72) Inventor: YANG, Mingshun, Taipei, Taiwan 106 (TW)
(74) Representative: Balder IP Law, S.L.
(86) International application number: PCT/CN2021/093573
(87) International publication number: WO 2022/121233

(56) References cited:
- CN-U- 207 296 853
- CN-U- 207 747 828
- CN-U- 208 650 783
- CN-U- 208 650 783
- TW-U- M 336 895
- US-A1- 2006 157 301
- US-A1- 2006 157 301
- US-A1- 2012 279 802
- US-B1- 6 422 344
- US-B2- 8 844 676

## Description

### BACKGROUND OF THE INVENTION

### 1. Technical Field

The present invention relates to a ladder structure, and more particularly, to a multifunction ladder structure that can either be used as a tire ladder or as an A-shaped ladder and can be applied to a variety of types or models of cars.

### 2. Description of Related Art

As cars are being in wide use nowadays for leisure activities or in recreations, MPVs, SUVs or CUVs are gaining more and more popular for people to acquire a car. With common characteristics and in nature, those vehicles are generally higher and are thus usually inconvenient when putting things on or fetching things from the car top, or just attempting to clean the car top. Sometimes, it may even unconsciously cause some unpredictable dangers. A ladder, or more specifically, a tire ladder for car use then often provides a general and popular solution.

US 2006/157301 A1 discloses a ladder for the aforementioned use.

While the tire ladders or ladders used on cars nowadays are mostly ladders of limited function that can either be used as a standing stairs or be used as a stairs leaning on the car, and are either lacking structure stability in use or standing stability on rough or inclined roads that often causes slipping or tumbling of the ladder in use, or being inconvenient or not easy to store or transport after using them. All those disadvantages generally lead to unpredictable dangerous situations and thus poor willingness to use on the user side, and eventually slow down the development of whole relating industry.

That results in the needs for an innovative ladder structure that is easy to apply or operate; can be used as a tire ladder putting stably on above a tire and in between the tire and its wheel fender; can be used as an A-shaped ladder standing firmly by a car or in other places; can be securely folded for transportation or storage; can be applied instantly on tires with different tread size and thus can be applied to almost all car types or models; and more importantly, a ladder structure that can instantly stand firmly on rough or inclined ground, roads or object surfaces, thus provide not only a great innovation and improvements to car application and relating industries, but also a more convenient and safer use of cars.

### SUMMARY OF THE INVENTION

The present invention discloses a multifunction ladder structure according to independent claim 1, which includes
a first ladder frame; a second ladder frame; and a pair of combining assemblies that combine the second ladder frame with the first ladder frame, altogether with an adjustable band and plural optional foot rods each slides or fixes individually in the first and
the second ladder frame. With the implementation of the present invention, the multifunction ladder structure has the special benefit of being easy to install or operate; being able to insert and set firmly in between a tire and the wheel fender as a tire ladder; being able to stand firmly beside a car or places as an A-shaped ladder; with further adding of an adjustable band on the first ladder frame to encircle the tire for even better stability when being used as a tire ladder, or to encircle the second ladder frame for safer storing or transporting; adopting plural foot rods each slides or remains still individually in the first or the second ladder frame, the multifunction ladder structure further applies better on tires of different size, and stands firmly on rough or inclined ground, roads or object surfaces; and with the top rod of the first ladder frame or the further installing of a second stepping unit, the stepping height of the A-shaped ladder can be further raised for even more convenient applications.

The present invention provides a multifunction ladder structure, comprising: a first ladder frame that includes a top rod, which is a sturdy U-shaped tube; two first frame tubes, each being fixed firmly on one end to a different end of said top rod, and contains a tube opening on the other end; at least one first stepping unit, being connected firmly in between and joining said two first frame tubes; and two first buckling units, each being fixed firmly on one said first frame tube; a second ladder frame that includes two second frame tubes, being sturdy tubes set in relative and next to said first frame tubes, and contains a tube opening on one end; two second buckling units, each being fixed in relative to a said first buckling unit and firmly on one said second frame tube; and at least one stepping tube, being a sturdy tube connected firmly in between and joining said two second frame tubes; and a pair of combining assemblies, each being fixedly connected to a meeting position of the top rod and a first frame tube, wherein the two combining assemblies combine the second ladder frame to the first ladder frame.

Implementation of the present invention at least involves the following inventive steps:
1. Easy to set up or to operate.
2. Can be used as a tire ladder putting stably on above a tire and in between the tire and its wheel fender.
3. Can be used as an A-shaped ladder standing firmly by a car or in other places.
4. The U-shaped top rod or the further implemented second stepping unit effectively increases the stepping height when using as an A-shaped ladder, and thus increases the practicality and convenience of using of the multifunction ladder structure.
5. With embracing of the tire by a further implemented adjustable band, the multifunction ladder structure can be even more stable when used as a tire ladder.
6. The multifunction ladder structure can be further securely folded for transportation or storage by wrapping the second ladder frame close and tight to the first ladder frame with the adjustable band.
7. Each of the further implemented foot rods can be adjusted separately that makes the multifunction ladder structure being able to be applied instantly on tires with different tread size and thus can be applied to almost all car types or models.
8. With the further implemented foot rods being able to be adjusted separately, the multifunction ladder structure can stand firmly on rough or inclined ground, roads or object surfaces.

The features and advantages of the present invention are detailed hereinafter with reference to the preferred embodiments. The detailed description is intended to enable a person skilled in the art to gain insight into the technical contents disclosed herein and implement the present invention accordingly. In particular, a person skilled in the art can easily understand the objects and advantages of the present invention by referring to the disclosure of the specification, the claims, and the accompanying drawings.

### BRIEF DESCRIPTION OF THE SEVERAL VIEWS OF THE DRAWINGS

The invention as well as a preferred mode of use, further objectives and advantages thereof will be best understood by reference to the following detailed description of illustrative embodiments when read in conjunction with the accompanying drawings, wherein:
FIG. 1 is a schematic three-dimensional view of a multifunction ladder structure according to an embodiment not forming part of the present invention.
FIG. 2A is a schematic three-dimensional view of a first ladder frame according to an embodiment of the present invention.
FIG. 2B is a schematic three-dimensional view of a second ladder frame according to an embodiment of the present invention.
FIG. 2C is a schematic three-dimensional view of combining assemblies according to an embodiment of the present invention. ∘
FIG. 3 is a schematic three-dimensional view of a supporting rod further connected at the joints of the top rod and the two first frame tubes according to an embodiment of the present invention.
FIG. 4A is a schematic three-dimensional view of a multifunction ladder structure further includes plural foot rods according to an embodiment of the present invention.
FIG. 4B is another schematic three-dimensional view of a multifunction ladder structure further includes plural foot rods according to an embodiment of the present invention.
FIG. 5A is a schematic three-dimensional view of the foot rods each contains a positioning protrusion, and each first frame tube and each second frame tube contains plural corresponding positioning holes according to an embodiment of the present invention.
FIG. 5B is another schematic three-dimensional view of the foot rods each contains a positioning protrusion, and each first frame tube and each second frame tube contains plural corresponding positioning holes according to an embodiment of the present invention.
FIG. 6A is a schematic three-dimensional view of a multifunction ladder structure being used as a tire ladder according to an embodiment not forming part of the present invention.
FIG. 6B is a schematic three-dimensional view of a multifunction ladder structure being used as an A-shaped ladder according to an embodiment not forming part of the present invention.
FIG. 7 is a schematic three-dimensional view of a multifunction ladder structure further includes an adjustable band in an embodiment of the present invention.
FIG. 8 is a schematic three-dimensional view of the second ladder frame being rotated close to the first ladder frame and enwrapped by an adjustable band according to an embodiment of the present invention.
FIG. 9 is a schematic three-dimensional view of a multifunction ladder structure being used as a tire ladder and an adjustable band encircles the tire for even better stability according to an embodiment of the present invention.
FIG. 10A is a schematic three-dimensional view of a multifunction ladder structure further includes a second stepping unit according to an embodiment not forming part of the present invention.
FIG. 10B is a schematic three-dimensional view of a multifunction ladder structure further includes a second stepping unit being formed as an extension of the first stepping unit according to an embodiment not forming part of the present invention.
FIG. 11 is a schematic three-dimensional view of a multifunction ladder structure wherein each of the two first frame tubes being a bending extension to a same direction extended from either end of the top rod according to an embodiment not forming part of the present invention.
FIG. 12 is another schematic three-dimensional view of a multifunction ladder structure wherein each of the two first frame tubes being a bending extension to a same direction extended from either end of the top rod according to an embodiment not forming part of the present invention.

### DETAILED DESCRIPTION OF THE EMBODIMENTS OF THE INVENTION

Embodiments together with illustrating graphs reference are provided hereafter for further understanding and recognizing of the realization of the present invention.

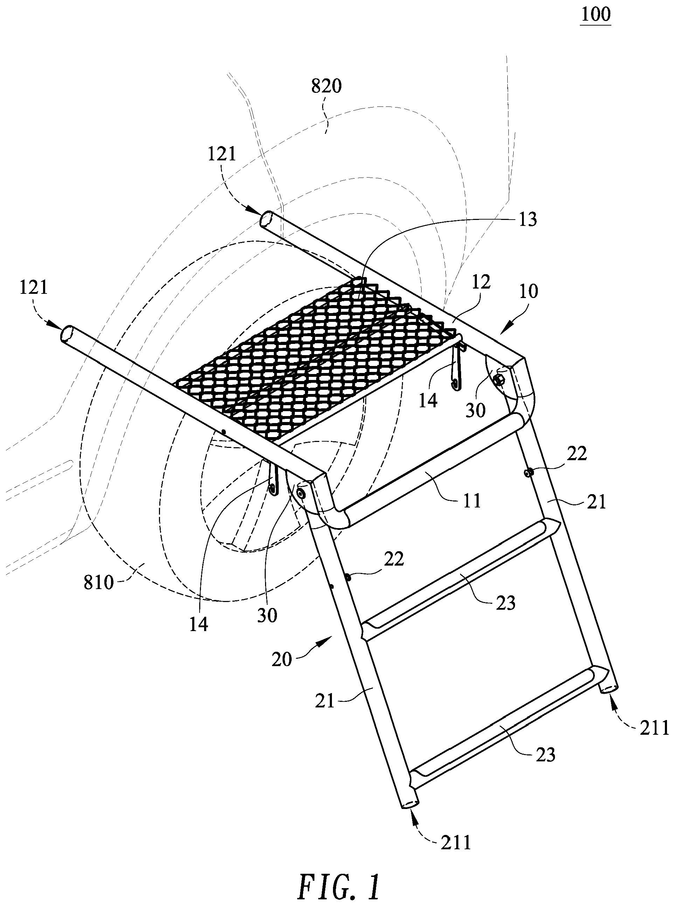

Firstly, please refer to FIG. 1, in an embodiment not forming part of the present invention, is a multifunction ladder structure 100 that comprises a first ladder frame 10; a second ladder frame 20; and two combining assemblies 30.

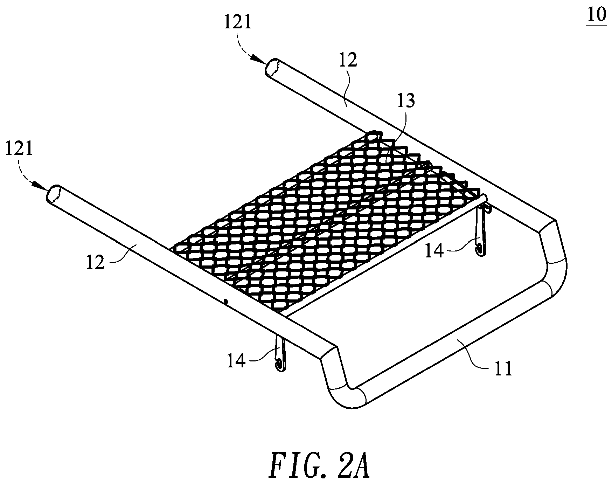

Please refer to FIG. 1 and FIG. 2A, the first ladder frame 10 of the multifunction ladder structure 100 includes a top rod 11, two first frame tubes 12, at least one first stepping unit 13, and two first buckling units 14. Wherein said top rod 11, being a sturdy U-shaped tube, can be made of metal tube, alloy tube or one of durable polymer materials.

As can be seen in FIG. 1 and FIG. 2A, the first frame tubes 12, that are aligned to a same direction, are formed in a way that each first frame tube 12 connects in one end to a different end of the top rod 11, while a tube opening 121 is being formed in the other end of each first frame tube 12. Further, an included angle is also formed between each of the first frame tubes 12 and the U-shaped top rod 11.

As for the forming material of the first frame tubes 12, same forming material that forms the U-shaped top rod 11 can be chosen, and in a performing embodiment, the first frame tubes 12 can be integrated in one piece together with the top rod 11. And at the same time, the two first frame tubes 12 can be formed aligned parallel to each other, or aligned nearly parallel to each other, wherein nearly parallel means the included angle between the two first frame tubes 12 being zero degree or less than 5 degrees.

As shown in FIG. 1 and FIG. 2A, the distance between the two first frame tubes 12 can be formed that with the tube opening 121 pointing at the tire 810, the first ladder frame 10 inserts freely in the space in between the tire 810 and its wheel fender 820 and rest on the tire 810.

Please refer again to FIG. 1 and FIG. 2A, at least one first stepping unit 13 is being connected firmly in between and joins said two first frame tubes 12, wherein the first stepping unit 13 can be a stepping pedal formed by a sturdy mesh tread, a sturdy tread pedal, a sturdy tread pedal with plural through holes, or at least two tubes placed in parallel to each other to form a sturdy tread surface for stepping on. Further, for safer use in applications, the first stepping unit 13 can be formed of one of anti-slip materials.

As also shown in FIG. 1 and FIG. 2A, the first buckling units 14 are formed such that each being connected to a first frame tube 12. Said first buckling units 14 can be a linking rod, a hook, a bendable linking rod, a bendable hook, or a webbing ribbon with at least a buckle or a buttonhole.

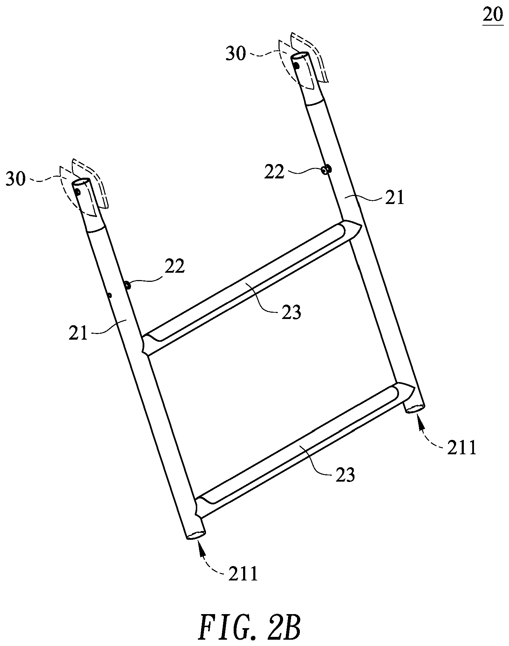

Please refer then to FIG. 1 and FIG. 2B, the second ladder frame 20 of the multifunction ladder structure 100 includes two second frame tubes 21, two second buckling units 22, and at least one stepping tube 23.

As shown in FIG. 1 and FIG. 2B, the second frame tubes 21 are set corresponding to the first frame tubes 12 and can also be sturdy tubes. The two second frame tubes 21can also be aligned parallel or nearly parallel to each other. Further, a tube opening 211 is being formed at one end of each second frame tube 21.

As for the thickness or size of any of the second frame tubes 21, same thickness value or size as the corresponding first frame tube 12 can be chosen. While the distance of the two second frame tubes 21 at any position can also be chosen to be same as the distance of the two first frame tubes 12 at a corresponding position.

As also shown in FIG. 1 and FIG. 2B, the second buckling units 22 are formed such that each second buckling unit 22 being connected to a second frame tube 21, and in the multifunction ladder structure 100, each said second buckling unit 22 is either linked together with or detached from a corresponding first buckling unit 14.

That is to say, the second ladder frame 20 can be further connected with the first ladder structure 10 with the two second buckling units 22 being linking together with the two corresponding first buckling units 14.

Please refer again to FIG. 1 and FIG. 2B, the stepping tube 23, being a sturdy tube connected firmly in between and joining the two second frame tubes 21, functions as a stepping stair of the second ladder frame 20.

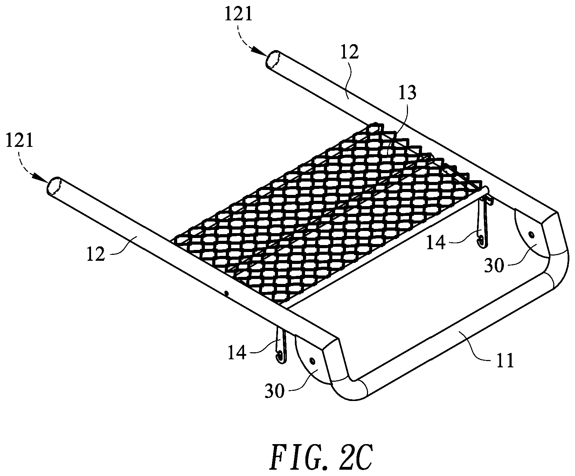

Please refer now to FIG. 1 and FIG. 2C, the two combining assemblies 30 of the multifunction ladder structure 100, each being fixedly connected to a meeting position of the top rod 11 and a first frame tube 12, combine the second ladder frame 20 to the first ladder frame 10 in a way that the second ladder frame 20 being either rotating at the combining assemblies 30 relative to the first ladder frame 10, or connected firmly on the first ladder frame 10 at the combining assemblies 30.

As such, the multifunction ladder structure 100 is formed when combining the second ladder frame 20 with the first ladder frame 10 by the combining assemblies 30. The second ladder frame 20 is then firmly fixed after rotating at the combining assemblies 30 with a required included angle with the first ladder frame 10 to make the multifunction ladder structure 100 a tire ladder or an A-shaped ladder.

Wherein the combining method can be that the second ladder frame 20 is being riveted or screwed and being rotating or securely fixed at the combining assemblies 30 and is thus fixedly connected to the first ladder frame 10 by the combining assemblies 30.

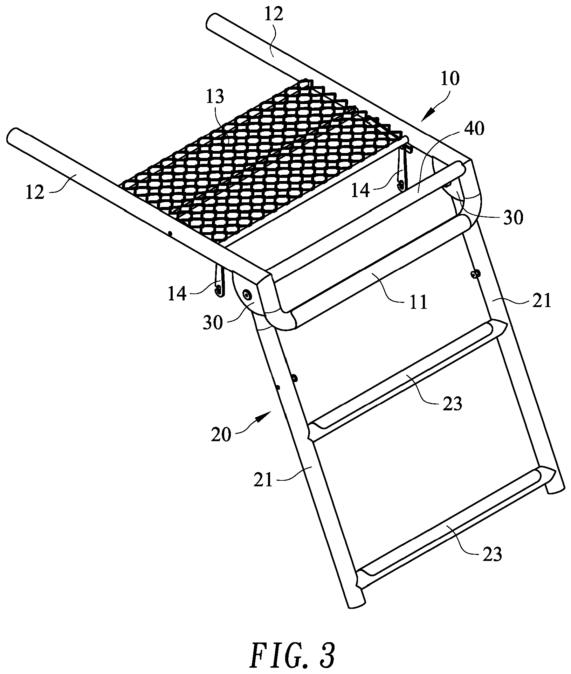

Next, please refer to FIG. 3, a supporting rod 40 can be further connected at the joints of the U-shaped top rod 11 and the two first frame tubes 12 to make the multifunction ladder structure 100 even more stable, firm and durable.

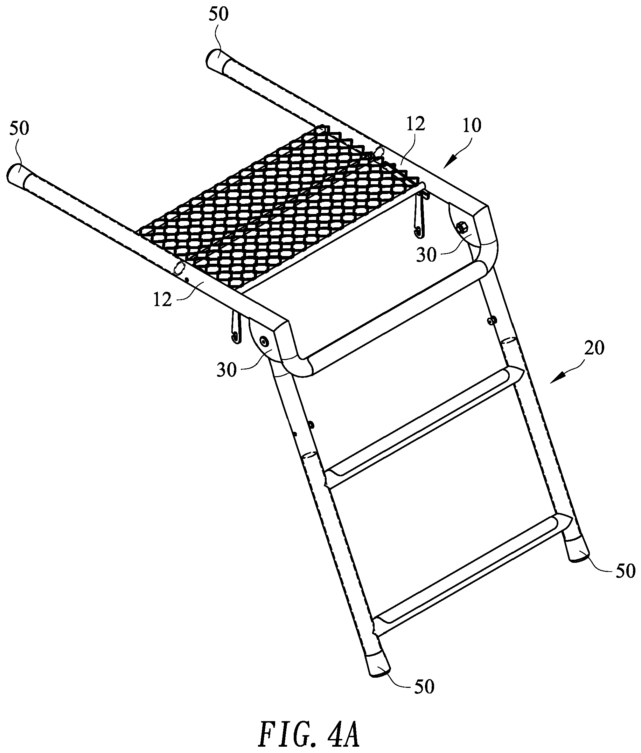

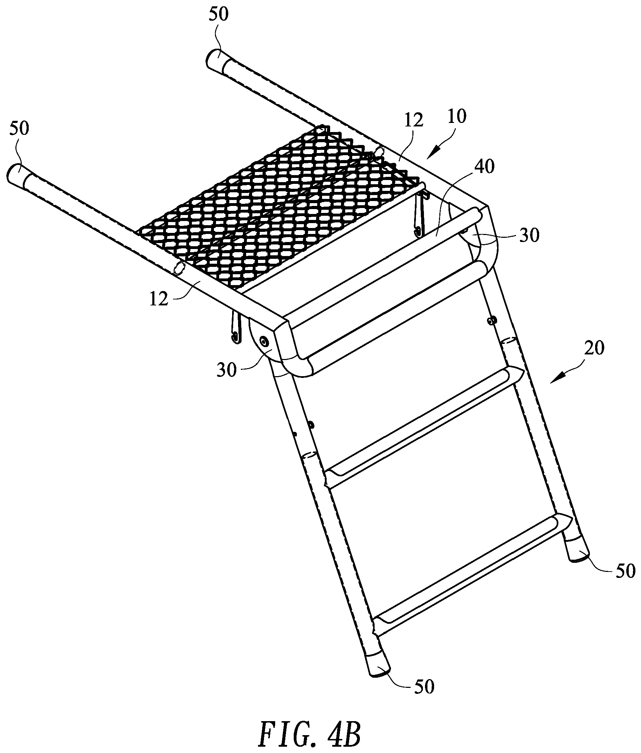

And as shown in FIG. 4A and FIG. 4B, with or without a supporting rod 40, the multifunction ladder structure 100 further includes plural foot rods 50, wherein each foot rod 50 is being placed in one first frame tube 12 and in one second frame tube 21 through the tube opening 121 and the tube opening 211 and being either sliding or fixedly contained in the first frame tube 12 or the second frame tube 21.

In embodiments, the foot end of each foot rod 50 extends outside the tube opening 121 or the tube opening 211, while at the same time the forming material of the foot end can be chosen from materials with greater friction or better elasticity for better standing stability of the multifunction ladder structure 100 and helping to prevent scratching the tire 810 or car body when inserting it to the spacing in between the tire 810 and the wheel fender 820.

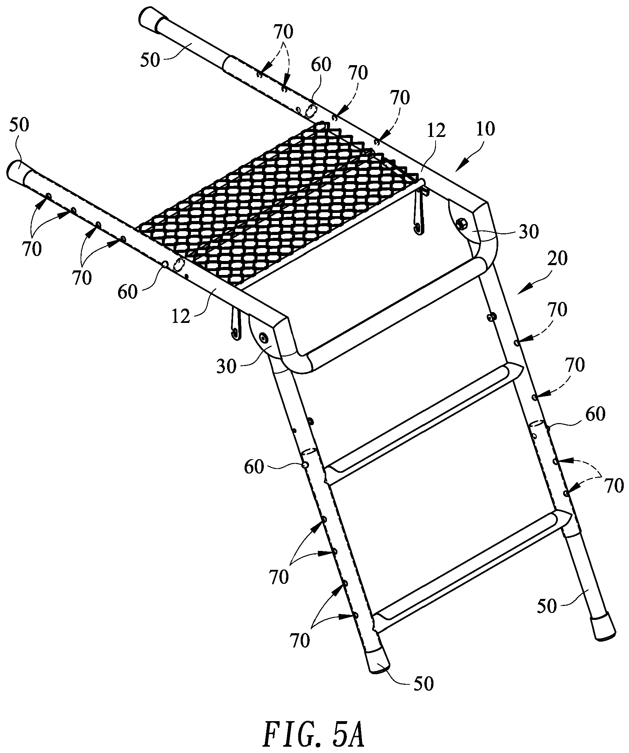

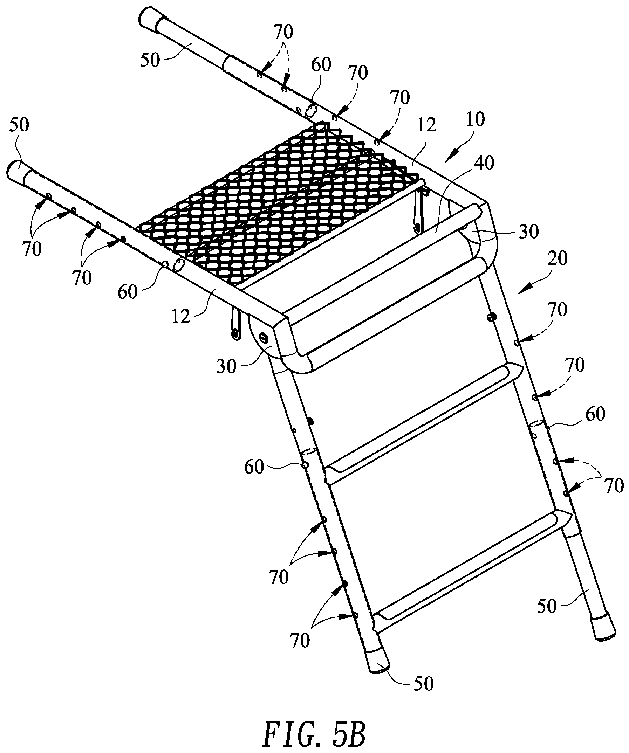

And as shown in FIG. 5A and FIG. 5B, a positioning protrusion 60 can be formed on each of the foot rods 50, and, at the same time, plural positioning holes 70 corresponding to the positioning protrusion 60 are being formed on each first frame tube 12 and each second frame tube 21. Each foot rod 50 can thus slide or remain still in a first frame tube 12 and a second frame tube 21 with the positioning protrusion 60 slides in the first frame tube 12 and the second frame tube 21 or stops at a positioning hole 70.

As such, each foot rod 50 can be independently sliding or remaining still in a certain position in a first frame tube 12 and a second frame tube 21 making each foot rod 50 extends a different required length outside the first frame tube 12 and or the second frame tube 21, and thus making the multifunction ladder structure 100 be able to stand firmly even on rough or inclined ground, roads or object surfaces and apply better on tires of different size or with different tread size, and thus can be applied to almost all car types or models.

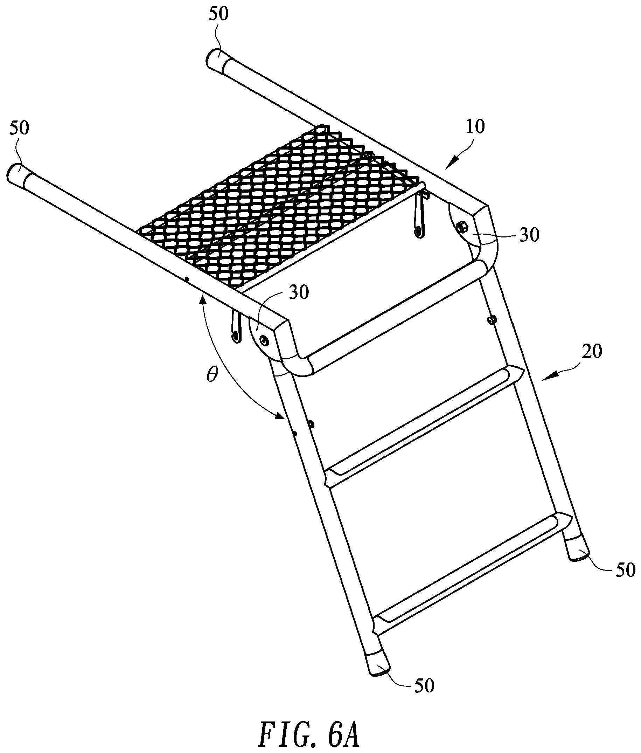

And as shown in FIG. 1 and FIG. 6A, the second ladder frame 20 can be securely fixed at the combining assemblies 30 possessing an included angle *θ* greater than 90 degrees to the first ladder frame 10 and forms a tire ladder for car applications together with the first ladder frame 10.

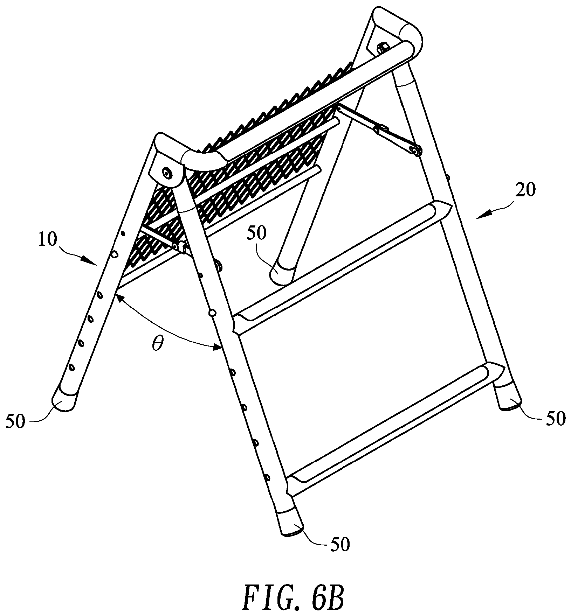

While as shown in FIG. 1 and FIG. 6B, the second ladder frame 20 can also be securely fixed at the combining assemblies 30 and forms an A-shaped ladder together with the first ladder frame 10. At this time, each second buckling unit 22 linking connects to one first buckling unit 14 and helps to form an even more stable A-shaped ladder for placing beside a car, a tire or other places for different applications.

In the embodiments, the method of connecting the first frame tubes 12 to the U-shaped top rod 11 can be any connection that prevents the U-shaped top rod 11 from interfering the second ladder frame 20 when the multifunction ladder structure 100 is being formed as a tire ladder; while at the same time, the U-shaped top rod 11 provides a stepping surface that is level or almost level for increasing the stepping height provided when the multifunction ladder structure 100 is being formed as an A-shaped ladder.

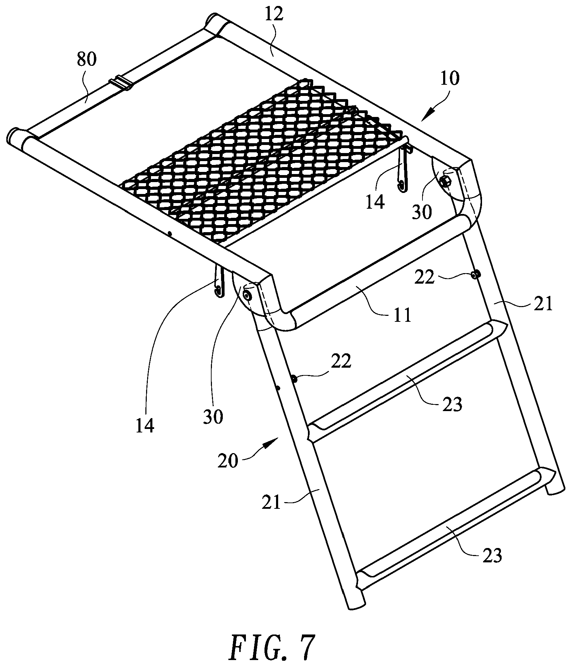

Please refer now to FIG. 7, an adjustable band 80 is further fixedly attached to the first ladder frame 10 of the multifunction ladder structure 100, wherein the adjustable band 80 is formed across the first frame tubes 12 and one end of the adjustable band 80 is fixedly attached to one first frame tube 12 and the other end of the adjustable band 80 is fixedly attached to the other first frame tube 12, with the length or tightness of the adjustable band 80 being adjusted by the user when adopted for applications.

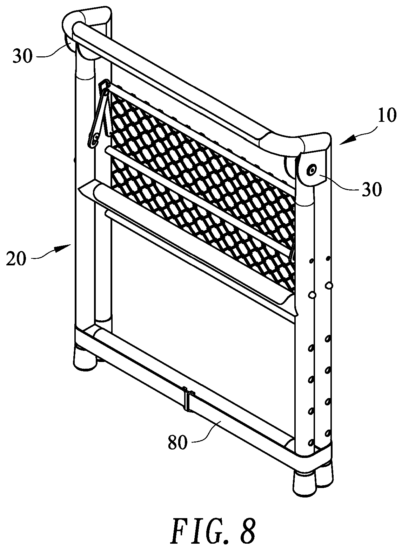

While as shown in FIG. 8, when storing or transporting the multifunction ladder structure 100, the second ladder frame 20 and the first ladder frame 10 can be folded close to each other with the adjustable band 80 encircles tight the second ladder frame 20 such that the second ladder frame 20 does not accidently evert from the first ladder frame 10 for safer and more convenient transportation or storage.

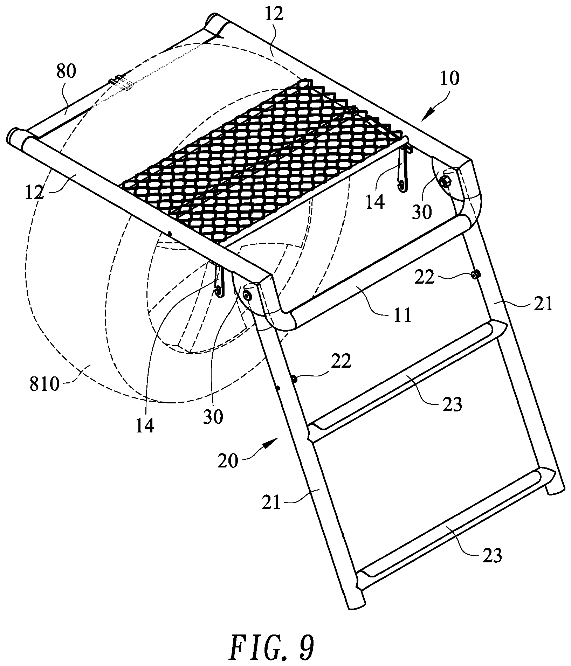

And as shown in FIG. 9, when the multifunction ladder structure 100 is formed and used as a tire ladder and being inserted into the spacing between a tire 810 and its wheel fender 820, the adjustable band 80 on the first ladder frame 10 can further be used to encircle the tire 810, or more specifically the upper part of the tire 810, on its surface, preventing the first ladder frame 10 and thus the whole multifunction ladder structure 100 from slipping out the tire 810 for even better stability and safety of use.

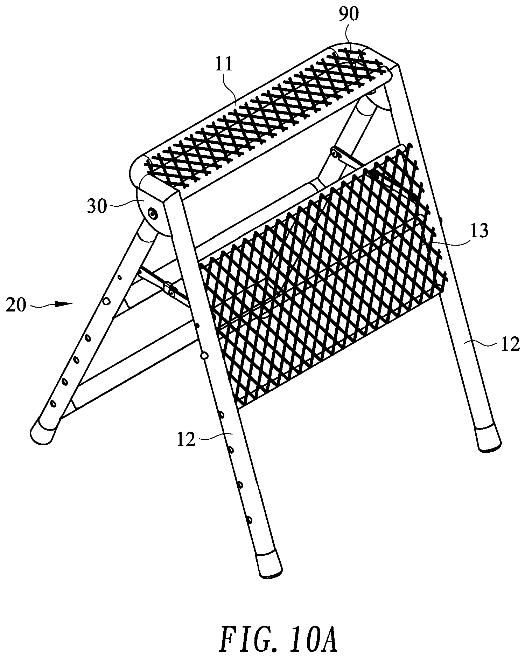

Please refer then to FIG. 10A, the multifunction ladder structure 100 can further include a second stepping unit 90 which can be formed across the U-shaped top rod 11. As such, when the multifunction ladder structure 100 is being used as an A-shaped ladder, the second stepping unit 90 provides a safer and easier stepping area together with the U-shaped top rod 11 to increase effectively the overall stepping height of the A-shaped ladder.

Said second stepping unit 90 can also be a stepping pedal formed by a sturdy mesh tread, a sturdy tread pedal, a sturdy tread pedal with plural through holes, or at least two tubes placed in parallel to each other to form a sturdy tread surface, and for safer use in applications, the second stepping unit 90 can also be formed of one of anti-slip materials.

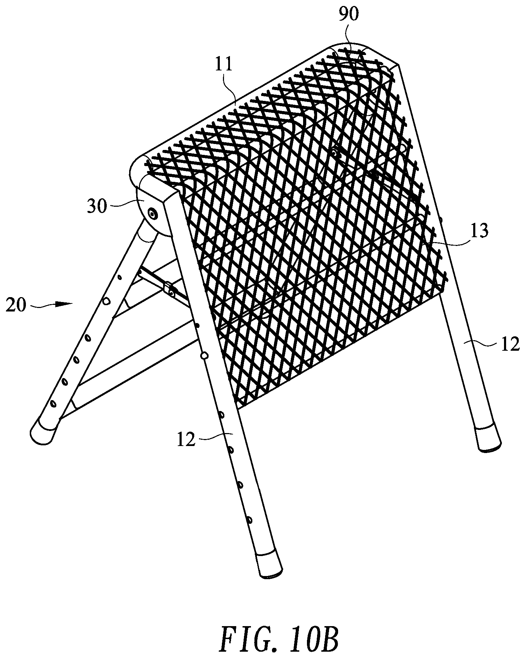

And as shown in FIG. 10B, the second stepping unit 90 can also be an extension from the first stepping unit 13, the production complexity of the multifunction ladder structure 100 is then reduced and the structure strength and durability of the first stepping unit 13 and the second stepping unit 90 are also increased.

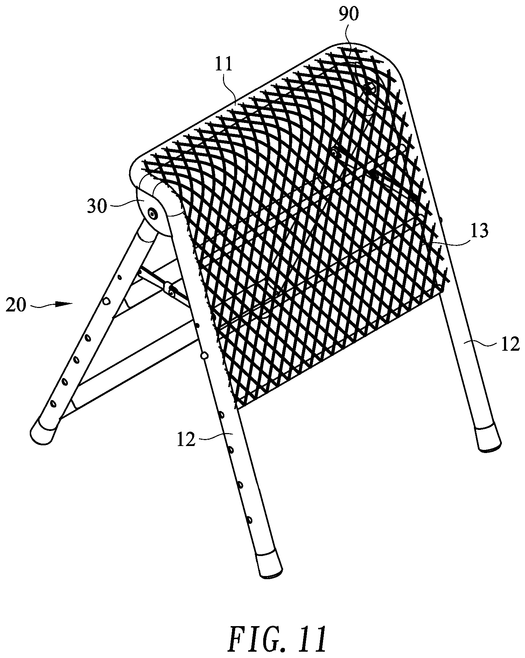

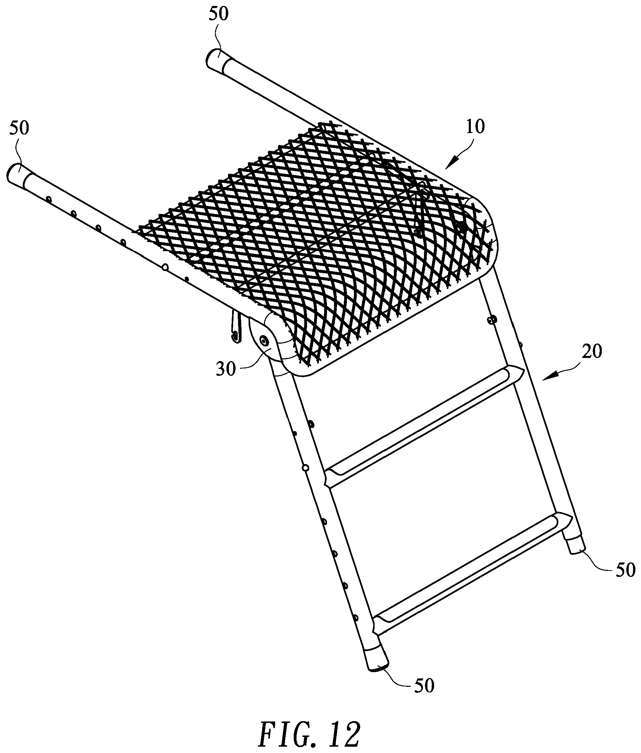

Further, as shown in FIG. 11 and FIG. 12, in all embodiments, the two first frame tubes 12 in the multifunction ladder structure 100 can be bending extensions from both ends of the U-shaped top rod 11 in the same direction, that is to say, one first frame tube 12 is a bending extension to a direction extended from one end of the top rod 11, and the other first frame tube 12 is a bending extension to the same direction extended from the other end of the top rod 11, thus providing not only the benefit of easier preparation of materials and smoother outlook, but also an enhancement of structure strength due to the reducing number of junctions in the multifunction ladder structure 100.

In conclusion, as shown in the embodiments and in the illustrating figures FIG. 1 to FIG. 12, with the special improved structural characteristics, multiple improvements as follows, which cannot be achieved by known existing solutions, can be achieved by the multifunction ladder structure 100 of the present invention: being easy to set up or to operate; can be used as a tire ladder putting stably on above a tire 810 and in between the tire 810 and its wheel fender 820; can be used as an A-shaped ladder standing firmly by a car or in other places; with embracing of the tire 810 by a further implemented adjustable band 80, the multifunction ladder structure 100 can be even more stable when used as a tire ladder, and can be further securely folded for transportation or storage by wrapping the second ladder frame 20 close and tight to the first ladder frame 10 with the adjustable band 80; each of the further implemented foot rods 50 can be adjusted separately to make the multifunction ladder structure 100 being able to be applied instantly on tires with different tread size and thus can be applied to almost all car types or models, and being able to stand further firmly on rough or inclined ground, roads or object surfaces; and the U-shaped top rod 11 or the further implemented second stepping unit 90 effectively increase the stepping height when using as an A-shaped ladder, and thus increase the practicality and convenience of using of the multifunction ladder structure 100.

The embodiments described above are intended only to demonstrate the technical concept and features of the present invention to enable a person skilled in the art to understand and implement the contents disclosed herein. It is understood that the disclosed embodiments are not to limit the scope of the present as defined by the appended claims.

## Claims

1. A multifunction ladder structure (100), comprising:
a first ladder frame (10) including:
a top rod (11), which is a sturdy U-shaped tube;
two first frame tubes (12), each being fixed firmly on one end to a different end of said top rod (11), and contains a tube opening (121) on the other end;
at least one first stepping unit (13), being connected firmly in between and joining said two first frame tubes (12); and
two first buckling units (14), one of the first buckling units (14) being fixed firmly on one said first frame tube (12), the other first buckling units (14) being fixed firmly on the other said first frame tube (12);
a second ladder frame (20) including:
two second frame tubes (21), being sturdy tubes set next to said first frame tubes (12), and each contains a tube opening (211) on one end;
two second buckling units (22), each being fixed firmly on one said second frame tube (21) in relative to a said first buckling unit (14); and
at least one stepping tube (23), being a sturdy tube connected firmly in between and j oining said two second frame tubes (21); and
a pair of combining assemblies (30), each being fixedly connected to a meeting position of the top rod (11) and one of the first frame tube (12), wherein the two combining assemblies (30) combine the second ladder frame (20) to the first ladder frame (10),
wherein the multifunction ladder structure (100) further includes plural foot rods (50), wherein each foot rod (50) is being placed in each of said first frame tubes (12) through said tube openings (121) and in each of said second frame tubes (21) through said tube openings (211),
wherein an adjustable band (80) further being formed across the first frame tubes (12), wherein one end of the adjustable band (80) is fixedly attached to one first frame tube (12) and the other end of the adjustable band (80) is fixedly attached to the other first frame tube (12).

2. The multifunction ladder structure (100) according to claim 1, wherein a supporting rod (40) further being connected in between and at the joints of the top rod (11) and connecting the two first frame tubes (12).

3. The multifunction ladder structure (100) according to claim 1, wherein each foot rod (50) includes a positioning protrusion (60), and wherein plural positioning holes (70) are being formed on each said first frame tube (12) and each said second frame tube (21) corresponding to the positioning protrusion (60).

4. The multifunction ladder structure (100) according to claim 1, wherein said second ladder frame (20) is being riveted or screwed to the combining assemblies (30) and being rotating at the combining assemblies (30).

5. The multifunction ladder structure (100) according to claim 1, wherein said second ladder frame (20) is being securely fixed at the combining assemblies (30) and forms a tire ladder together with the first ladder frame (10).

6. The multifunction ladder structure (100) according to claim 1, wherein said second ladder frame (20) is being securely fixed at the combining assemblies (30) and forms an A-shaped ladder together with the first ladder frame (10).

7. The multifunction ladder structure (100) according to claim 1 further includes a second stepping unit (90) formed across the U-shaped top rod (11).

8. The multifunction ladder structure (100) according to claim 1, wherein one first frame tube (12) is a bending extension to a direction extended from one end of the top rod (11), and the other first frame tube (12) is a bending extension to the same direction extended from the other end of the top rod (11).

## Patentansprüche

1. Multifunktionsleiterstruktur (100), umfassend:
einen ersten Leiterrahmen (10), aufweisend:
eine obere Stange (11), die ein stabiles U-förmiges Rohr ist;
zwei erste Rahmenrohre (12), die jeweils an einem Ende fest mit dem oberen Rohr (11) verbunden sind und am anderen Ende eine Rohröffnung (121) aufweisen;
mindestens eine erste Trittstufe (13), die fest zwischen den beiden ersten Rahmenrohren (12) angebracht ist und diese verbindet; und
zwei erste Knickelemente (14), wobei eines der ersten Knickelemente (14) fest an einem der ersten Rahmenrohre (12) und das andere Knickelement (14) fest am anderen ersten Rahmenrohr (12) angebracht ist;
einen zweiten Leiterrahmen (20), aufweisend:
zwei zweite Rahmenrohre (21), die stabile Rohre sind, die neben den ersten Rahmenrohren (12) angeordnet sind und jeweils an einem Ende eine Rohröffnung (211) aufweisen;
zwei zweite Knickelemente (22), die jeweils fest an einem der zweiten Rahmenrohre (21) relativ zu einem ersten Knickelement (14) befestigt sind; und
mindestens ein Trittrohr (23), das ein stabiles Rohr ist, das fest zwischen den beiden zweiten Rahmenrohren (21) angebracht ist und diese verbindet; und
ein Paar Verbindungselemente (30), wobei jedes fest mit einer Verbindungsstelle der oberen Stange (11) und einer der ersten Rahmenrohre (12) verbunden ist, wobei die beiden Verbindungselemente (30) den zweiten Leiterrahmen (20) mit dem ersten Leiterrahmen (10) verbinden,
wobei die Multifunktionsleiterstruktur (100) ferner mehrere Fußstangen (50) umfasst, wobei jede Fußstange (50) durch die Rohröffnungen (121) in jedem der ersten Rahmenrohre (12) und durch die Rohröffnungen (211) in jedem der zweiten Rahmenrohre (21) eingeführt ist,
wobei ferner ein verstellbares Band (80) über die ersten Rahmenrohre (12) gespannt ist, wobei ein Ende des verstellbaren Bandes (80) fest an einem ersten Rahmenrohr (12) und das andere Ende des verstellbaren Bandes (80) fest am anderen ersten Rahmenrohr (12) befestigt ist.

2. Multifunktionsleiterstruktur (100) nach Anspruch 1, wobei ferner eine Stützstange (40) zwischen und an den Verbindungsstellen der oberen Stange (11) angebracht ist und die beiden ersten Rahmenrohre (12) verbindet.

3. Multifunktionsleiterstruktur (100) nach Anspruch 1, wobei jede Fußstange (50) einen Positionierungsvorsprung (60) aufweist und an jedem ersten Rahmenrohr (12) und jedem zweiten Rahmenrohr (21) mehrere Positionierungslöcher (70) entsprechend dem Positionierungsvorsprung (60) ausgebildet sind.

4. Multifunktionsleiterstruktur (100) nach Anspruch 1, wobei der zweite Leiterrahmen (20) mit den Verbindungselementen (30) vernietet oder verschraubt ist und sich um diese dreht.

5. Multifunktionsleiterstruktur (100) nach Anspruch 1, wobei der zweite Leiterrahmen (20) fest mit den Verbindungselementen (30) verbunden ist und zusammen mit dem ersten Leiterrahmen (10) eine Reifenleiter bildet.

6. Multifunktionsleiterstruktur (100) nach Anspruch 1, wobei der zweite Leiterrahmen (20) fest mit den Verbindungselementen (30) verbunden ist und zusammen mit dem ersten Leiterrahmen (10) eine A-förmige Leiter bildet.

7. Multifunktionsleiterstruktur (100) nach Anspruch 1, ferner umfassend eine zweite Trittstufe (90), die quer über die U-förmige obere Stange (11) angeordnet ist.

8. Multifunktionsleiterstruktur (100) nach Anspruch 1, wobei ein erstes Rahmenrohr (12) eine gebogene Verlängerung in eine Richtung ist, die sich von einem Ende der oberen Stange (11) erstreckt, und das andere erste Rahmenrohr (12) eine gebogene Verlängerung in die gleiche Richtung ist, die sich vom anderen Ende der oberen Stange (11) aus erstreckt.

## Revendications

1. Structure d'échelle multifonctionnelle (100), comprenant :
un premier cadre d'échelle (10) comprenant :
une tige supérieure (11), qui est un tube robuste en forme de U ;
deux premiers tubes de cadre (12), chacun étant fixé solidement sur une extrémité à une extrémité différente de ladite tige supérieure (11), et contient une ouverture de tube (121) sur l'autre extrémité ;
au moins une première unité de marche (13), qui est reliée solidement entre lesdits deux premiers tubes de cadre (12) et les joignant ; et
deux premières unités de bouclage (14), l'une des premières unités de bouclage (14) étant solidement fixée sur l'un desdits premiers tubes de cadre (12), l'autre des premières unités de bouclage (14) étant solidement fixée sur l'autre desdits premiers tubes de cadre (12) ;
un second cadre d'échelle (20) comprenant :
deux seconds tubes de cadre (21), qui sont des tubes robustes placés à côté desdits premiers tubes de cadre (12), et chacun contient une ouverture de tube (211) sur une extrémité ;
deux secondes unités de bouclage (22), chacune étant solidement fixée sur l'un desdits seconds tubes de cadre (21) par rapport à ladite première unité de bouclage (14) ; et
au moins un tube de marche (23), qui est un tube robuste relié solidement entre lesdits seconds tubes de cadre (21) et les joignant ; et une paire d'ensembles de combinaison (30), chacun étant relié de manière fixe à une position de rencontre entre la tige supérieure (11) et l'un des premiers tubes de cadre (12), où les deux ensembles de combinaison (30) combinent le second cadre d'échelle (20) au premier cadre d'échelle (10),
dans laquelle la structure d'échelle multifonctionnelle (100) comprend en outre plusieurs tiges de pied (50), dans laquelle chaque tige de pied (50) est placée dans chacun desdits premiers tubes de cadre (12) à travers lesdites ouvertures de tube (121) et dans chacun desdits seconds tubes de cadre (21) à travers lesdites ouvertures de tube (211),
dans laquelle une bande réglable (80) est en outre formée en travers des premiers tubes de cadre (12), dans laquelle une extrémité de la bande réglable (80) est attachée de manière fixe à un premier tube de cadre (12) et l'autre extrémité de la bande réglable (80) est attachée de manière fixe à l'autre premier tube de cadre (12).

2. Structure d'échelle multifonctionnelle (100) selon la revendication 1, dans laquelle une tige de support (40) est en outre reliée entre et au niveau des jonctions de la tige supérieure (11) et relie les deux premiers tubes de cadre (12).

3. Structure d'échelle multifonctionnelle (100) selon la revendication 1, dans laquelle chaque tige de pied (50) comprend une saillie de positionnement (60), et dans laquelle plusieurs trous de positionnement (70) sont formés sur chacun desdits premiers tubes de cadre (12) et chacun desdits seconds tubes de cadre (21) en correspondance avec la saillie de positionnement (60).

4. Structure d'échelle multifonctionnelle (100) selon la revendication 1, dans laquelle ledit second cadre d'échelle (20) est riveté ou vissé aux ensembles de combinaison (30) et peut tourner au niveau desdits ensembles de combinaison (30).

5. Structure d'échelle multifonctionnelle (100) selon la revendication 1, dans laquelle ledit second cadre d'échelle (20) est solidement fixé au niveau des ensembles de combinaison (30) et forme une échelle pour pneu conjointement avec le premier cadre d'échelle (10).

6. Structure d'échelle multifonctionnelle (100) selon la revendication 1, dans laquelle ledit second cadre d'échelle (20) est solidement fixé au niveau des ensembles de combinaison (30) et forme une échelle en A conjointement avec le premier cadre d'échelle (10).

7. Structure d'échelle multifonctionnelle (100) selon la revendication 1, comprenant en outre une seconde unité de marche (90) formée en travers de la tige supérieure en forme de U (11).

8. Structure d'échelle multifonctionnelle (100) selon la revendication 1, dans laquelle un premier tube de cadre (12) est un prolongement courbé dans une direction s'étendant à partir d'une extrémité de la tige supérieure (11), et l'autre premier tube de cadre (12) est un prolongement courbé dans la même direction s'étendant à partir de l'autre extrémité de la tige supérieure (11).
